# EUROPÄISCHE PATENTSCHRIFT

(11) **EP 3 145 046 B1**
(45) Veröffentlichungstag und Bekanntmachung des Hinweises auf die Patenterteilung: **22.04.2020**
(21) Anmeldenummer: 16186531.6
(22) Anmeldetag: 31.08.2016
(51) Int. Cl.: H02J 9/02, H05B 37/02

(54) **STEUERGERÄT FÜR EINE LEUCHTE**
CONTROL DEVICE FOR A LUMINAIRE
APPAREIL DE COMMANDE D'ÉCLAIRAGE

(30) Priorität: 31.08.2015 DE 202015006147 U
(43) Veröffentlichungstag der Anmeldung: 22.03.2017
(73) Patentinhaber: Tridonic GmbH & Co KG, 6851 Dornbirn (AT); Zumtobel Lighting GmbH, 6850 Dornbirn (AT)
(72) Erfinder: PFATSCHBACHER, Reinhard, 6842 Koblach (AT); KEARS, John, Witton Gilbert, Durham DH7 6RS (GB); MAYR, Gregor, 6974 Gaißau (AT); ZÜGER, Dominik, Newcastle upon Tyne NE4 6ET (GB); MASSEY, Simon, Spennymoor DL16 6JE (GB); DALBY, Paul, Spennymoor DL16 7XL (GB)
(74) Vertreter: Neusser, Sebastian

(56) Entgegenhaltungen:
- EP-A1- 2 947 969
- US-A1- 2005 057 353
- US-B2- 6 538 568

## Beschreibung

### TECHNISCHES GEBIET

Verschiedene Ausführungsformen betreffen ein Steuergerät für eine Leuchte, welches eine Kontrollschnittstelle umfasst, die mit einer Notstrombatterie für ein Leuchtmittel der Leuchte koppelbar ist. Insbesondere betreffen verschiedene Ausführungsformen ein Steuergerät, welches eingerichtet ist, um eine Entladung der Notstrombatterie zu steuern.

### HINTERGRUND

Es sind Leuchten bekannt, welche eine Notstrombatterie umfassen, um ein Leuchtmittel im Falle eines Ausfalls der Energieversorgung über einen Netzanschlusses mittels der Notstrombatterie zu betreiben (Notstrombetrieb). Derart kann für eine gewisse Zeit auch ohne Energieversorgung über den Netzanschluss ein Betrieb des Leuchtmittels gewährleistet werden, sodass zum Beispiel die Beleuchtung eines Raums sichergestellt werden kann und Personen ein Gebäude verlassen können.

Aus verschiedenen Gründen kann es erstrebenswert sein, dass die Notstrombatterie eine vergleichsweise hohe Ladungskapazität aufweist. Zum Beispiel kann aus Gründen der Betriebssicherheit vorgegeben sein, dass ein bestimmter Schwellenwert der Ladungskapazität nicht unterschritten wird. Dies kann im Rahmen eines Inbetriebnahmetests überprüft werden.

Häufig verwenden Notstrombatterien Batteriezellen, welche bei erstmaliger Inbetriebnahme konditioniert werden sollten, um eine vergleichsweise hohe Ladungskapazität bereitzustellen. Eine solche Konditionierung der Notstrombatterie einer Notstrombatterie kann zum Beispiel das initiale Durchführen eines Entladungs-Ladungs-Trainingszyklus umfassen.

Aus der Druckschrift US 2005/0057353 A1 ist ein Steuergerät für eine Leuchte gemäß dem Oberbegriff des Anspruchs 1 bekannt. Diese Druckschrift offenbart insbesondere eine Notlichteinheit, welche eine Lampe, eine Backup-Batterie und eine Steuerung sowie eine Netzwerkschnittstelle enthält. Dabei verbindet die Steuerung die Notstrombatterie mit der Lampe, wenn ein Notfallzustand und ein Ausfall der Hauptstromversorgung festgestellt werden. Die Netzwerkschnittstelle ist mit einem Feueralarmnetzwerk verbunden und empfängt Befehle über ein Feueralarmnetzwerk. Jede Notlichteinheit hat eine eindeutige Kennung in Bezug auf das Brandmelde-Netzwerk.

Aus der Druckschrift US 6,538,568 B2 ist ein Notlichtüberwachungs- und Kontrollsystem bekannt, welches Notleuchten in einem Gebäude steuert und überwacht. Dabei plant eine zentrale Steuereinheit automatisch Selbsttests für jede der Notleuchten und speichert die Ergebnisse der Tests in einem Speicher. Die Selbsttests umfassen Tests der Notstromquelle und der Lampe. Weiter werden Fehler diagnostiziert und Reparaturen vorgeschlagen. Die zentrale Steuereinheit erzeugt einen Bericht der Selbsttests und benachrichtigt einen Bediener über Fehler. Der Bediener sieht sich die Testberichte an, steuert die Notlichter und plant Tests. Weiter erkennt das System automatisch neu installierte Notlichtbetriebsgeräte.

Im Rahmen der Installation von Leuchten mit Notstrombetrieb in einem Gebäude bzw. bei Austausch von Notstrombatterien der Leuchten (Installationsphase; engl. commissioning) kann es erforderlich sein, z.B. aus Gründen der Betriebssicherheit oder zu Testzwecken, die Energieversorgung über den Netzanschluss zu unterbrechen. Z.B. kann es erforderlich sein, Teile des Gebäudes in dem die Installation stattfindet, stromlos zu schalten. Bei Verlassen des Gebäudes, z.B. nachts, kann es aus Gründen von Verkehrssicherungsmaßnahmen erforderlichen sein, Teile des Gebäudes stromlos zu schalten.

Deshalb kann es jedoch häufig nicht oder nur eingeschränkt möglich sein, dass während der Installationsphase unmittelbar nach erstmaliger Inbetriebnahme der Leuchte eine Konditionierung der Notstrombatterie vorgenommen wird, möglich ist. Zum Beispiel kann es während der Installationsphase vorkommen, dass es aufgrund von Stromausfällen zu einer Unterbrechung der Energieversorgung über den Netzanschluss der Leuchte kommt. Dann kann es nicht oder nur eingeschränkt möglich sein, eine Aufladung der Notstrombatterie über den Netzanschluss zu bewirken. Zum Beispiel kann dadurch ein Entladungs-Aufladungs-Trainingszyklus der Notstrombatterie im Rahmen der Konditionierung unterbrochen werden. Dadurch kann wiederum die Ladungskapazität der Notstrombatterie herabgesetzt sein, d.h. ein sog. Gesundheitszustand (engl. State-Of-Health, SOH) der Notstrombatterie kann herabgesetzt sein. Dies kann Wartungskosten erhöhen.

Darüber hinaus ist es grundsätzlich erstrebenswert, eine unkontrollierte Entladung der Notstrombatterie vor dem erstmaligen Konditionieren der Notstrombatterie zu verhindern. Wenn es während der Installationsphase zu einer Unterbrechung der Energieversorgung über der Netzanschluss kommt, kann es jedoch zu einer solchen unkontrollierten Entladung der Notstrombatterie kommen.

Beispielsweise werden Leuchten- und insbesondere Notleuchten- typischerweise vor Einzug der Zwischendecke an einen Netzanschluss angeschlossen. Dies erfolgt oftmals lange vor tatsächliche Inbetriebnahme des Gebäudes. Zu diesem Zeitpunkt wird typischerweise auch die Notstrombatterie angeschlossen. Während der Bauphase wird der Netzanschluss häufig unterbrochen. Typischerweise wird der Netzanschluss während der Bauarbeiten am Tag eingeschaltet, nämlich um verschiedene Baumaschinen und Bauwerkzeuge zu betreiben. Am Abend wird über eine elektrische Sicherung oftmals für das gesamte Gebäude den Netzanschluss getrennt. Dies kann bewirken, dass für die Leuchten der Notstrombetrieb wiederholt aktiviert wird. Dies bedeutet, dass die Notstrombatterien wiederholt entladen und aufgeladen werden. Dadurch kann die Lebensdauer der Notstrombatterien herabgesetzt werden.

### ZUSAMMENFASSUNG

Deshalb besteht ein Bedarf für verbesserte Techniken zur Steuerung der Entladung einer Notstrombatterie einer Leuchte. Insbesondere besteht ein Bedarf für solche Techniken, welche negative Auswirkungen der Entladung auf einen SOH der Notstrombatterie vermeiden.

Diese Aufgabe wird durch ein Steuergerät für eine Leuchte mit den Merkmalen des unabhängigen Anspruch 1 gelöst. Die abhängigen Ansprüche definieren Ausführungsformen.

Erfindungsgemäß umfasst das Steuergerät für eine Leuchte eine Kommunikationsschnittstelle. Die Kommunikationsschnittstelle ist eingerichtet, um Steuerdaten über eine Datenverbindung zu empfangen. Das Steuergerät umfasst weiterhin eine Kontrollschnittstelle. Die Kontrollschnittstelle ist mit einer Notstrombatterie für mindestens ein Leuchtmittel der Leuchte gekoppelt. Das Steuergerät umfasst weiterhin mindestens einen Schaltkreis. Der mindestens eine Schaltkreis ist mit der Kommunikationsschnittstelle und der Kontrollschnittstelle gekoppelt. Der mindestens eine Schaltkreis ist eingerichtet, um mittels der Kontrollschnittstelle in Abhängigkeit der Steuerdaten eine Entladung der Notstrombatterie zu steuern.

Wenn eine Kommunikationsschnittstelle verwendet wird, um Steuerdaten zu übertragen, in Abhängigkeit von welchen die Entladung der Notstrombatterie gesteuert werden kann, so kann ein besonders flexibles Steuern der Entladung der Notstrombatterie gewährleistet werden. Beispielsweise kann ein großer Informationsgehalt über die Steuerdaten übertragen werden. Derart kann es möglich sein, unterschiedliche Techniken zum Steuern der Entladung der Notstrombatterie differenziert anzuwenden.

Z.B. kann der mindestens eine Schaltkreis mindestens einen Mikroprozessor umfassen bzw. durch mindestens einen Mikroprozessor implementiert sein. Es wäre auch möglich, dass der mindestens eine Schaltkreis mindestens eine programmierbare Logikgatteranordnung (engl. Field Programmable Gate Array, FPGA) umfassen bzw. durch mindestens ein FPGA implementiert sein. Der mindestens eine Schaltkreis könnte auch analoge Bauelemente umfassen. Der mindestens eine Schaltkreis könnte beispielsweise einen Analog-Digital-Umsetzer umfassen.

Die Kommunikationsschnittstelle und/oder die Kontrollschnittstelle können als Hardware und/oder Software implementiert sein. Die Kommunikationsschnittstelle und / oder die Kontrollschnittstelle können z.B. einen oder mehrere Schaltkreise umfassen. Z.B. könnte insbesondere die Kontrollschnittstelle Leistungselektronik-Bauelemente umfassen, z.B. um die Energieversorgung des mindestens einen Leuchtmittels zu steuern.

Zum Beispiel könnte die Datenverbindung als paketierte Datenverbindung implementiert sein. Zum Beispiel könnte die Datenverbindung über ein drahtgebundenes Übertragungsmedium oder ein drahtloses Übertragungsmedium implementiert sein. Es wäre zum Beispiel möglich, dass die Kommunikationsschnittstelle eingerichtet ist, um über die Datenverbindung als paketierte Datenbus-Kommunikation zu kommunizieren. Zum Beispiel können die Steuerdaten ein oder mehrere Datenpakete umfassen. Alternativ oder zusätzlich wäre es zum Beispiel möglich, dass die Kommunikationsschnittstelle eingerichtet ist, um über die Datenverbindung als Punkt-zu-Multipunkt-Kommunikation zu kommunizieren. Durch das Verwenden der Datenverbindung ist es möglich, die Entladung der Notstrombatterie fernzusteuern.

Die Kommunikationsschnittstelle des Steuergeräts ist eingerichtet, um die Steuerdaten durch Demodulation einer Versorgungsspannung der Leuchte zu empfangen. Z.B. könnte die Kommunikationsschnittstelle weiterhin mit einem Netzanschluss gekoppelt sein. Die Kommunikationsschnittstelle könnte eingerichtet sein, um die Steuerdaten durch Bestimmen eines Phasenanschnitts und/oder Phasenabschnitts mindestens einer Halbwelle einer Versorgungsspannung des Netzanschlusses zu demodulieren. Z.B. könnte das Vorhandensein (Fehlen) eines Phasenanschnitts eine EINS (NULL) codieren; derart können die Steuerdaten binär codiert übertragen werden. Dadurch können auf die Versorgungsspannung des Netzanschlusses die Steuerdaten aufgeprägt werden. Grundsätzlich sind unterschiedlichste Modulationstechniken denkbar. Ein Beispiel wäre z.B. das Vorsehen der Phasenanschnitte und /oder der Phasenabschnitte einer positiven und/oder negativen Halbwelle der Versorgungsspannung des Netzanschlusses. Beispielsweise kann der Phasenanschnitt oder Phasenabschnitt 1-20 %, optional 10-15 % der Periodendauer der Versorgungsspannung betragen, sodass einerseits eine zuverlässige Detektion der Steuerdaten und andererseits eine geringe Verzerrung der Versorgungsspannung gewährleistet werden. Vorzugsweise findet der Phasenanschnitt oder Phasenabschnitt in nur einer Halbwelle der Versorgungsspannung statt. Durch das Vorhandensein des Phasenanschnitts und /oder des Phasenabschnitts kann Information auf die Versorgungsspannung codiert werden und derart die Datenverbindung implementiert werden. Eine beispielhafte Referenzimplementierung der Phasenanschnitte und / oder Phasenabschnitte ist aus WO 2012/145775 A1 bekannt, deren diesbezügliche Offenbarung hierin durch Querverweis aufgenommen wird.

Die Notstrombatterie wird häufig auch als Akkumulator bezeichnet. Die Notstrombatterie wird häufig auch als elektrischer Ladungsspeicher oder Energiespeicher bezeichnet. Die Notstrombatterie kann zum Beispiel ein oder mehrere Batteriezellen umfassen. Zum Beispiel können mehrere Batteriezellen der Notstrombatterie in Serie oder parallel verschaltet sein. Eine Batteriezelle kann dabei zum Beispiel eine negative Elektrode, einen ionenleitenden Elektrolyten, einen Separator, der auch ein lonenleiter sein kann, und eine positive Elektrode umfassen. Die Notstrombatterie kann wiederaufladbar ausgestaltet sein, d.h. die Notstrombatterie kann eingerichtet sein, um mehrere Entladungs-Aufladungs-Zyklen durchzuführen. Z.B. kann die Notstrombatterie über einen Netzanschluss der Leuchte aufgeladen werden. Zum Beispiel wäre es möglich, dass die Kontrollschnittstelle weiterhin mit dem Netzanschluss für das mindestens eine Leuchtmittel gekoppelt ist.

Der Netzanschluss kann z.B. ein 110 V oder 220 V Wechselspannungsanschluss sein, z.B. mit 50 Hz oder 60 Hz, etc.. Der Netzanschluss kann eine entsprechende Versorgungsspannung bereitstellen. Z.B. kann die Kontrollschnittstelle mindestens einen Schalter umfassen, der wahlweise die Notstrombatterie mit dem mindestens einen Leuchtmittel verbindet und der wahlweise die Notstrombatterie mit dem Netzanschluss verbindet. Derart kann eine Aufladung der Notstrombatterie über die Versorgungsspannung des Netzanschlusses und eine Entladung der Notstrombatterie über das mindestens eine Leuchtmittel implementiert werden.

Die Notstrombatterie kann eine solche Ladungskapazität aufweisen, dass ein Notstrombetrieb der Leuchte möglich ist. Dazu kann die Notstrombatterie über das mindestens eine Leuchtmittel als Verbraucher entladen werden; dabei kann die Ladungskapazität der Notstrombatterie ausreichend sein, um einen Betrieb der Leuchte für einen Zeitraum von Minuten, mehreren 10 Minuten oder sogar Stunden zu gewährleisten. Derart können Sicherheitserfordernisse erreicht werden. Z.B. kann die Notstrombatterie eine Ladungskapazität von 1 Ah oder mehr, bevorzugt von 1,6 AH oder mehr, besonders bevorzugt von 4,5 Ah oder mehr aufweisen.

Der mindestens eine Schaltkreis kann zum Beispiel eingerichtet sein, um mittels der Kontrollschnittstelle Energieversorgung des mindestens einen Leuchtmittels wahlweise über den Netzanschluss oder über die Notstrombatterie zu steuern. Zum Beispiel kann in einem Zustand, in dem Energieversorgung über den Netzanschluss möglich ist, der mindestens eine Schaltkreis eingerichtet sein, die Energieversorgung über den Netzanschluss zu implementieren. Im Falle einer persistenten Unterbrechung der Versorgungsspannung bzw. eines Ausfalls der Energieversorgung über den Netzanschluss kann der mindestens eine Schaltkreis eingerichtet sein, um die Energieversorgung des mindestens einen Leuchtmittel über die Notstrombatterie zu implementieren, d.h. den Notstrombetrieb auszulösen. Dies bedeutet, dass der mindestens eine Schaltkreis eingerichtet sein kann, um eine Entladung der Notstrombatterie in Abhängigkeit der Verfügbarkeit der Energieversorgung über den Netzanschluss zu steuern. Zum Beispiel kann eine Unterbrechung der Energieversorgung des Netzanschlusses vorliegen, wenn die Versorgungsspannung des Netzanschlusses einen vorgegebenen Schwellenwert persistent für eine bestimmte Zeitdauer, beispielsweise 10 Sekunden oder 20 Sekunden oder 1 Minute unterschreitet. Z.B. kann der vorgegebene Schwellenwert 50 % oder 80 % der Nenn-Versorgungsspannung betragen.

Es ist zum Beispiel möglich, dass unterschiedliche Bauteile der Kontrollschnittstelle sowohl für die Energieversorgung des mindestens einen Leuchtmittels über den Netzanschluss, als auch über die Notstrombatterie verwendet werden. Z.B. kann dasselbe Vorschaltgerät sowohl für den Notlichtbetrieb als auch für den Normalbetrieb verwendet werden.

Im Allgemeinen wäre es möglich, dass die Leuchte lediglich ein einzelnes Leuchtmittel umfasst. Es wäre aber auch möglich, dass die Leuchte mehr als ein Leuchtmittel umfasst. Zum Beispiel könnte die Leuchte zwei oder mehr Leuchtmittel umfassen. Es wäre zum Beispiel möglich, dass je nach Energieversorgung unterschiedliche Leuchtmittel betrieben werden. Zum Beispiel könnte in dem Notstrombetrieb der Leuchte ein erstes Leuchtmittel durch die Notstrombatterie betrieben werden; in einem Zustand, in dem die Energieversorgung über den Netzanschluss implementiert wird, d.h. im Normalbetrieb, kann ein zweites Leuchtmittel betrieben werden. Es wäre aber auch möglich, dass ein und dasselbe Leuchtmittel durch den Netzanschluss und die Notstrombatterie betrieben werden kann.

Es können verschiedenste Leuchtmittel verwendet werden. Zum Beispiel kann das Leuchtmittel eine Gasentladungslampe oder eine Licht-emittierende Diode (LED) sein.

Das Steuern der Entladung der Notstrombatterie kann zum Beispiel bedeuten: wahlweise erlauben oder blockieren der Entladung der Notstrombatterie über die Leuchte als Verbraucher. Zum Steuern der Entladung der Notstrombatterie ist es zum Beispiel möglich, dass der Schaltkreis Leistungselektronik, wie beispielsweise einen Leistungsschalter, etwa einen Isolierschicht-Feldeffekttransistor o.ä., der Kontrollschnittstelle ansteuert. Zum Beispiel könnte die Kontrollschnittstelle einen Schalter umfassen, welcher die Notstrombatterie wahlweise mit dem mindestens einen Leuchtmittel der Leuchte koppelt. Je nach Stellung des Schalters kann dann eine Entladung der Notstrombatterie über das mindestens eine Leuchtmittel als Verbraucher ermöglicht oder blockiert werden.

Durch das Steuern der Entladung der Notstrombatterie kann erreicht werden, dass die Entladung ferngesteuert wird. Insbesondere kann ermöglicht werden, dass eine Entladung gezielt erlaubt oder blockiert wird. Dadurch kann erreicht werden, dass während der Installationsphase keine ungewollte Entladung der Notstrombatterie stattfindet; insbesondere kann vermieden werden, dass aufgrund von Ausfällen der Energieversorgung durch den Netzanschluss unkontrollierte Entladungen der Notstrombatterie durch Auslösen des Notstrombetriebs der Leuchte resultieren. Dadurch kann die Lebensdauer der Notstrombatterie erhöht werden und/oder eine Ladungskapazität der Notstrombatterie erhöht werden; dies wiederum kann Wartungskosten senken.

Zum Beispiel kann der mindestens eine Schaltkreis eingerichtet sein, um - beispielsweise in Abhängigkeit der Steuerdaten oder der gemessenen Zeitabfolge mehrerer Unterbrechungen der Versorgungsspannung - die Entladung der Notstrombatterie zu blockieren. In anderen Worten kann also der mindestens eine Schaltkreis eingerichtet sein, um einen Notstrombetrieb der Leuchte wahlweise zu unterbinden. Durch das Fernsteuern des Blockierens der Entladung der Notstrombatterie kann erreicht werden, dass während einer Installationsphase - in der es zu häufigen Ausfällen der Energieversorgung über den Netzanschluss kommen kann - eine ungewollte Entladung der Notstrombatterie blockiert bzw. unterbunden wird. Insbesondere kann eine Entladung der Notstrombatterie vor einem erstmaligen Konditionieren blockiert werden. Dadurch kann eine Teilentladung der Notstrombatterie vor dem erstmaligen Konditionieren verhindert werden.

Nachfolgend werden verschiedene Beispiele in Bezug auf eine Implementierung mit Steuerdaten beschrieben: Dabei sind unterschiedliche Implementierungen der Steuerdaten denkbar. Zum Beispiel könnten die Steuerdaten das Blockieren der Entladung der Notstrombatterie auslösen und/oder beenden.

Zum Beispiel könnte der mindestens eine Schaltkreis eingerichtet sein, um als Reaktion auf das Empfangen von AUS-Steuerdaten die Entladung der Notstrombatterie zu blockieren. In einem solchen Szenario wäre es zum Beispiel möglich, zu Beginn der Installationsphase die AUS-Steuerdaten an das Steuergerät der Leuchte zu senden; derart kann sichergestellt werden, dass zunächst keine Entladung der Notstrombatterie stattfindet. Während der Installationsphase kann dann eine Energieversorgung über den Netzanschluss jedenfalls zeitweise ausfallen, ohne dass eine Entladung der Notstrombatterie aufgrund des Notstrombetriebs der Leuchte ausgelöst werden würde. Eine Herabsetzung der Ladungskapazität der Notstrombatterie findet nicht statt.

Z.B. kann es möglich sein, dass der mindestens eine Schaltkreis eingerichtet ist, um als Reaktion auf das Empfangen von AUS-Steuerdaten die Entladung der Notstrombatterie für eine vorgegebene Zeitdauer zu blockieren. Die AUS-Steuerdaten können also in anderen Worten das Blockieren der Entladung auslösen. Die AUS-Steuerdaten können z.B. ein entsprechendes Informationsfeld beinhalten, z.B. ein 1-Bit oder multi-Bit Informationsfeld. Derart kann verhindert werden, dass z.B. unbeabsichtigter Weise der Notstrombetrieb der Leuchte dauerhaft blockiert wird - was ein Sicherheitsrisiko darstellen könnte.

In verschiedenen Szenarien kann die vorgegebene Zeitspanne zum Beispiel in einem Datenspeicher des Steuergeräts hinterlegt sein. Es wäre zum Beispiel möglich, dass der mindestens eine Schaltkreis eingerichtet ist, um die vorgegebene Zeitspanne aus dem Datenspeicher auszulesen.

Es wäre auch möglich, dass die AUS-Steuerdaten die vorgegebene Zeitspanne indizieren. Derart ist es zum Beispiel möglich, flexibel je nach Fortschritt der Installationsphase unterschiedliche Zeitspannen fernzusteuern.

In anderen Szenarien wäre es möglich, dass das Blockieren der Entladung der Notstrombatterie solange persistent ist, bis gegenteilige Instruktionen als Steuersignal über die Datenverbindung erhalten werden; dies bedeutet, dass das Blockieren der Entladung der Notstrombatterie und damit des Notstrombetriebs der Leuchte aktiv aufgehoben werden muss. Derart kann die Notstrombatterie besser vor ungewollter Entladung geschützt werden.

In verschiedenen Szenarien wäre es z.B. möglich, dass der mindestens eine Schaltkreis eingerichtet ist, um bis zum Empfangen von AN-Steuerdaten die Entladung der Notstrombatterie zu blockieren.

Zum Beispiel könnte der mindestens eine Schaltkreis also eingerichtet sein, um ab dem Empfangen der AUS-Steuerdaten bis zum Empfangen der AN-Steuerdaten die Entladung der Notstrombatterie zu blockieren.

Der mindestens eine Schaltkreis kann auch eingerichtet sein, um die Entladung der Notstrombatterie ab einer erstmaligen Aufladung der Notstrombatterie über den Netzanschluss bis zum Empfangen der AN-Steuerdaten zu blockieren. Derart kann zum Beispiel erreicht werden, dass ab der erstmaligen Inbetriebnahme der Notstrombatterie durch Verbindung derselben mit dem Netzanschluss bis zum Empfangen der AN-Steuerdaten eine Entladung der Notstrombatterie unterbunden wird.

In verschiedenen Anwendungsfällen kann es derart möglich sein, während der Installationsphase mehrere Leuchten in Betrieb zu nehmen und nach Abschluss der Installationsphase durch Versenden der AN-Steuerdaten den Notstrombetrieb der verschiedenen Leuchten freizuschalten.

Eine solche Implementierung kann den Vorteil einer besonders einfachen Installation einzelner Leuchten bzw. Notstrombatterien mit sich bringen: Insbesondere kann es entbehrlich sein, unmittelbar nach der erstmaligen Inbetriebnahme einer Leuchte die AUS-Steuerdaten zu versenden; ein Blockieren der Entladung der Notstrombatterie erfolgt automatisch nach dem erstmaligen Verbinden der Notstrombatterie mit dem Netzanschluss.

Solche Techniken, die obenstehend in Bezug auf die Steuerdaten beschrieben wurden, können in anderen Beispielen auch in Bezug auf eine Zeitabfolge von Unterbrechungen der Versorgungsspannung implementiert werden.

Obenstehend wurden vornehmlich Techniken beschrieben, welche es ermöglichen, eine Entladung der Notstrombatterie wahlweise zu blockieren oder zu erlauben. Im Zusammenhang mit den Steuerdaten ist es aber auch möglich, gemäß verschiedener Szenarien andere Eigenschaften der Entladung der Notstrombatterie zu steuern. Z.B. kann die Entladung der Notstrombatterie gezielt ausgelöst werden:
Zum Beispiel könnte der mindestens eine Schaltkreis eingerichtet sein, um mittels der Kontrollschnittstelle in Abhängigkeit der Steuerdaten mindestens einen Entladungs-Aufladungs-Trainingszyklus der Notstrombatterie auszulösen.

Zum Beispiel könnte der mindestens eine Schaltkreis eingerichtet sein, um mittels der Kontrollschnittstelle in Abhängigkeit der Steuerdaten zwei, drei oder mehr Entladungs-Aufladungs-Trainingszyklen der Notstrombatterie auszulösen. Mittels der Entladungs-Aufladungs-Trainingszyklen kann es möglich sein, eine Konditionierung von Batteriezellen der Notstrombatterie durchzuführen und derart eine Ladungskapazität der Notstrombatterie bzw. den SOH zu erhöhen; eine Lebensdauer der Notstrombatterie kann so erhöht werden. Wartungskosten können gesenkt werden.

Zum Beispiel kann der Entladungs-Aufladungs-Trainingszyklus eingerichtet sein, um eine Entladung der Notstrombatterie bis zu einem vorgegebenen Schwellenwert zu bewirken; entsprechend kann der Entladungs-Aufladungs-Trainingszyklus eingerichtet sein, um nach dem Erreichen des Schwellenwerts eine Aufladung der Notstrombatterie bis zu einem weiteren Schwellenwert zu bewirken. Derart kann zum Beispiel ein Tiefenentladungsschutzbereich implementiert werden.

Durch das gezielte Auslösen des Entladungs-Aufladungs-Trainingszyklus kann erreicht werden, dass zum Beispiel gezielt vor einem Inbetriebnahmetest, im Rahmen dessen die Ladungskapazität der Notstrombatterie im Anschluss an die Installationsphase verifiziert wird, eine Konditionierung der Notstrombatterie derart stattfindet, dass die Ladungskapazität erhöht wird.

Der Entladungs-Aufladungs-Trainingszyklus kann z.B. gezielt nach Abschluss der Installationsphase ausgelöst werden. Zu einem solchen Zeitpunkt ist nicht mehr mit der Unterbrechung der Energieversorgung über den Netzanschluss zu rechnen, sodass die Aufladung der Notstrombatterie im Rahmen, des Entladungs-Aufladungs-Trainingszyklus ungestört stattfinden kann. Der Entladung-Aufladungs-Trainingszyklus kann dann an einem Stück und ohne Unterbrechung durchgeführt werden, was eine besonders gute Konditionierung der Notstrombatterie bewirken kann.

Der mindestens eine Schaltkreis kann zum Beispiel eingerichtet sein, um in Abhängigkeit der Steuerdaten ein Signal über eine Mensch-Maschinen-Schnittstelle auszugeben. Das Signal kann für Menschen wahrnehmbar ausgestaltet sein. Zum Beispiel könnte die Mensch-Maschinen-Schnittstelle Elemente umfassen, die aus folgender Gruppe ausgewählt sind: ein oder mehrere Statuslampen, einer Sprachschnittstelle, einen Bildschirm. Z.B. wäre es möglich zu indizieren, dass der Notstrombetrieb blockiert ist; dies kann eine Sicherheit im Betrieb der Leuchte erhöhen.

Obenstehend wurden verschiedene Techniken zum Steuern der Entladung der Notstrombatterien Abhängigkeit von Steuerdaten beschrieben. Entsprechende Techniken können zum Beispiel auch im Zusammenhang mit der Messung der Zeitabfolge von mehreren Unterbrechungen der Versorgungsspannung des Netzanschlusses verwendet werden.

Beispielsweise kann das Vergleichen der gemessenen Zeitabfolge von mehreren Unterbrechungen der Versorgungsspannung mit dem gespeicherten Zeitmuster das Überprüfen umfassen, ob die gemessene Zeitabfolge bestimmte - beispielsweise parametrisiert definierte - Erfordernisse des gespeicherten Zeitmusters erfüllt. Für den Fall, dass die gemessene Zeitabfolge der mehreren Unterbrechungen die Erfordernisse des gespeicherten Zeitmusters erfüllt, könnte beispielsweise selektiv die Entladung der Notstrombatterie blockiert werden. Solche Erfordernisse könnten z.B. einen oder mehrere der folgenden Elemente umfassen: Zeitdauer einer Unterbrechung, z.B. in Perioden der Netzfrequenz; Zeitdauer zwischen zwei Unterbrechungen; Anzahl der Unterbrechungen; Zeitdauer zwischen erster und letzter Unterbrechung. Beispielsweise kann im Allgemeinen eine einzelne Unterbrechung länger als eine Periode der Versorgungsspannung sein, optional länger als zehn Perioden, weiter optional länger als 100 Perioden. Dadurch können wiederum die obenstehend beschriebenen vorteilhaften Effekte in Bezug auf eine Verlängerung der Lebensdauer der Notstrombatterie, insbesondere im Zusammenhang mit der Installationsphase, erzielt werden.

In manchen Beispielen kann das Zeitmuster mehr als fünf Unterbrechungen der Versorgungsspannung innerhalb einer vorgegebenen Zeitdauer fordern. Dies kann bedeuten, dass das Zeitmuster eine schnelle Abfolge (engl. bunch) von Unterbrechungen der Versorgungsspannung fordern kann. Dabei könnte die vorgegebene Zeitdauer zum Beispiel im Bereich von 20 Sekunden bis 3 Minuten liegen. Bei einer solchen Implementierung der Zeitdauer kann es möglich sein, dass die Unterbrechungen durch Personal händisch herbeigeführt werden. Beispielsweise könnte das Personal eine entsprechende Sicherung des Netzanschlusses mehrfach innerhalb der geforderten Zeitdauer betätigen. Durch das Fordern mehrere Unterbrechungen, beispielsweise mehr als fünf Unterbrechungen, kann eine ungewollte Blockade der Entladung der Notstrombatterie vermieden werden.

In anderen Beispielen wäre es auch möglich, dass die Zeitdauer kürzer ist. Beispielsweise könnte die Zeitdauer nicht länger als 2 Sekunden sein, optional nicht länger als 0,5 Sekunden sein. Derart könnte die Zeitabfolge von mehreren Unterbrechungen beispielsweise automatisch durch geeignete Geräte umgesetzt werden. Beispielsweise könnte eine elektrische Sicherung eingerichtet sein, um bei Betätigung eines entsprechenden Tasters die Zeitabfolge von mehreren Unterbrechungen der Versorgungsspannung des Netzanschlusses zu bewirken. Beispielsweise könnte die elektrische Sicherung elektronisch und/oder mechanisch eingerichtet sein, um die Zeitabfolge von mehreren Unterbrechungen der Versorgungsspannung des Netzanschlusses bei Betätigung des entsprechenden Tasters zu bewirken.

### KURZBESCHREIBUNG DER FIGUREN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

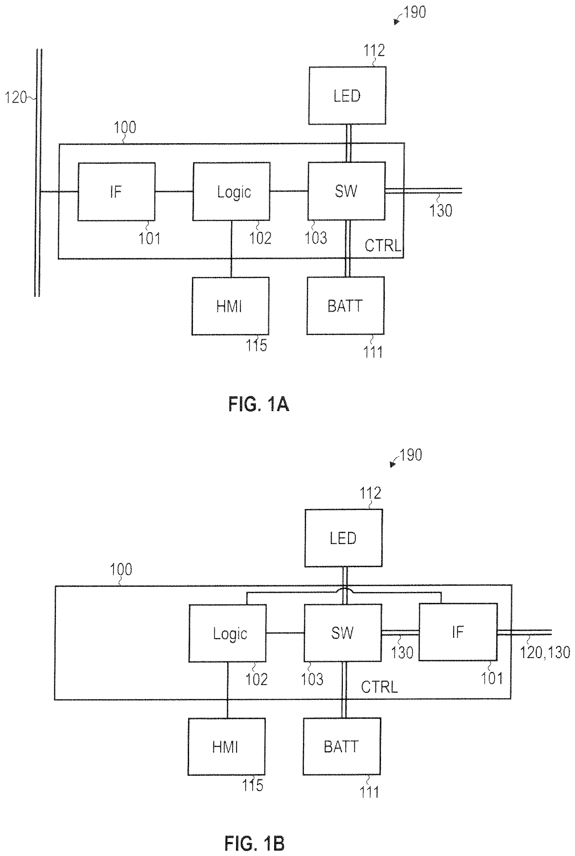

FIG. 1A ist eine schematische Darstellung einer Leuchte, die ein Steuergerät gemäß verschiedener Beispiele, welche das Verständnis der Erfindung erleichtern, umfasst, wobei das Steuergerät eingerichtet ist, um eine Entladung einer Notstrombatterie der Leuchte in Abhängigkeit von Steuerdaten, die über eine Kommunikationsschnittstelle empfangen werden, zu steuern.
FIG. 1B ist eine schematische Darstellung einer Leuchte, die ein Steuergerät gemäß verschiedener Ausführungsformen umfasst, wobei das Steuergerät eingerichtet ist, um eine Entladung einer Notstrombatterie der Leuchte in Abhängigkeit von Steuerdaten, die über eine Kommunikationsschnittstelle empfangen werden, zu steuern, wobei die Kommunikationsschnittstelle Teil eines Netzanschlusses ist.

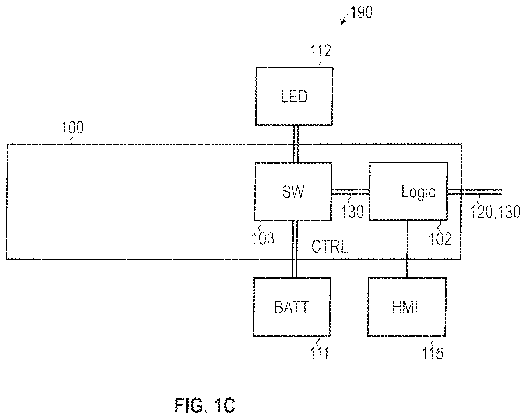

FIG. 1C ist eine schematische Darstellung einer Leuchte, die ein Steuergerät gemäß verschiedener Beispiele, welche das Verständnis der Erfindung erleichtern, umfasst, wobei das Steuergerät eingerichtet ist, um eine Entladung einer Notstrombatterie der Leuchte in Abhängigkeit von einer gemessenen Zeitabfolge von mehreren Unterbrechungen einer Versorgungsspannung zu steuern.

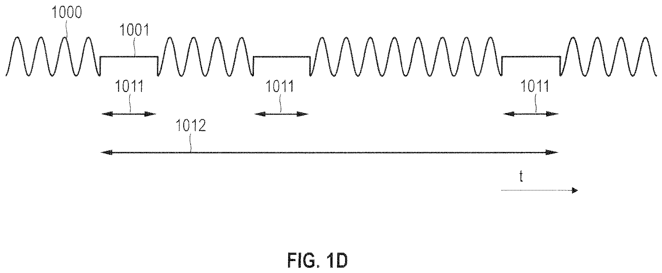

FIG. 1D ist eine schematische Darstellung einer Zeitabfolge von mehreren Unterbrechungen einer Versorgungsspannung eines Netzanschlusses gemäß verschiedener Ausführungsformen.

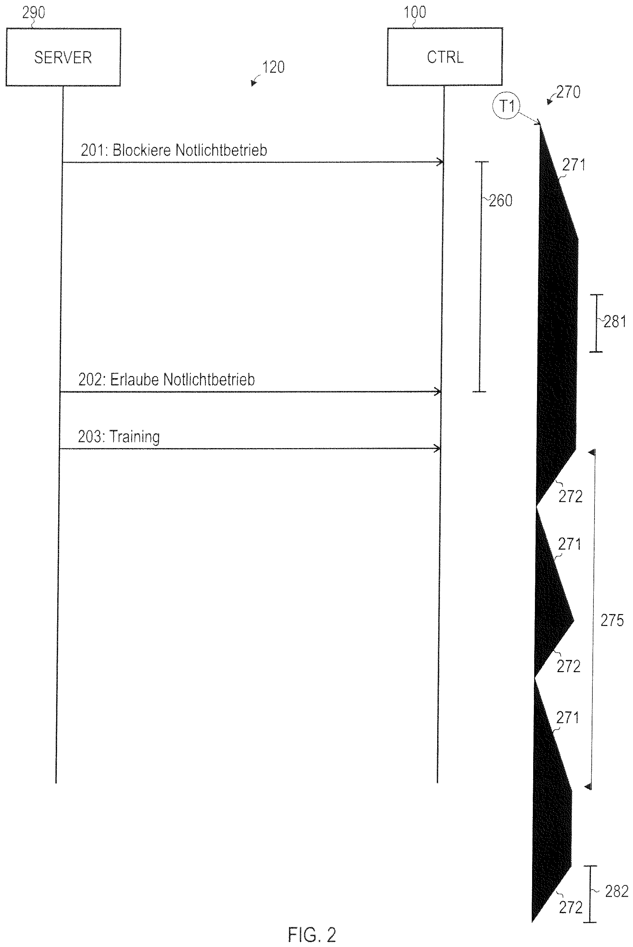

FIG. 2 ist ein Signalflussdiagramm, welches Steuerdaten, die von einem zentralen Server an das Steuergerät gesendet werden, illustriert, wobei FIG. 2 weiterhin das Blockieren der Entladung der Notstrombatterie in Abhängigkeit der Steuerdaten gemäß verschiedener Ausführungsformen illustriert, wobei die Steuerdaten AUS-Steuerdaten und AN-Steuerdaten umfassen.

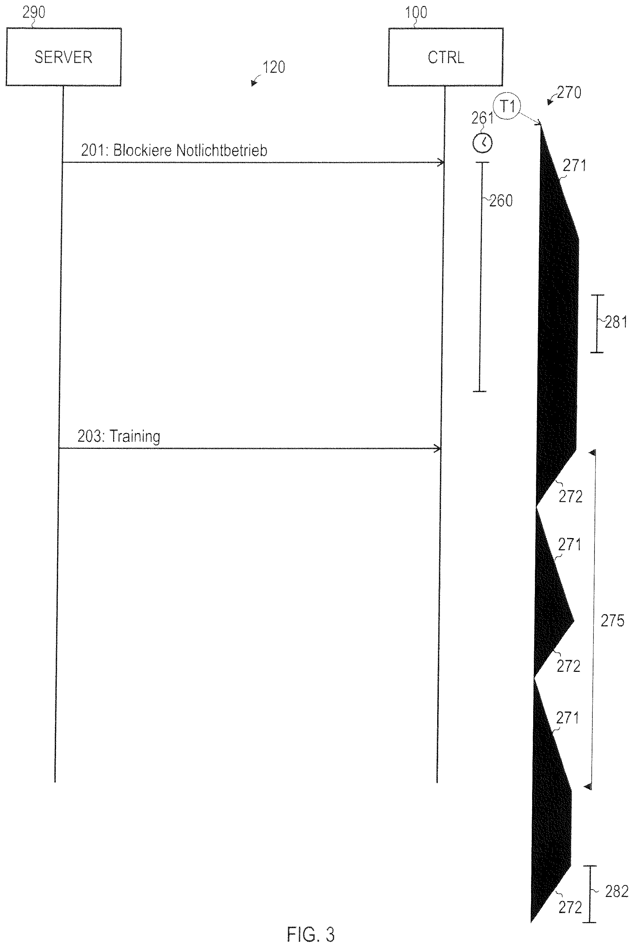

FIG. 3 ist ein Signalflussdiagramm, welches Steuerdaten, die von einem zentralen Server an das Steuergerät gesendet werden, illustriert, wobei FIG. 3 weiterhin das Blockieren der Entladung der Notstrombatterie in Abhängigkeit der Steuerdaten gemäß verschiedener Ausführungsformen illustriert, wobei die Steuerdaten AUS-Steuerdaten umfassen.

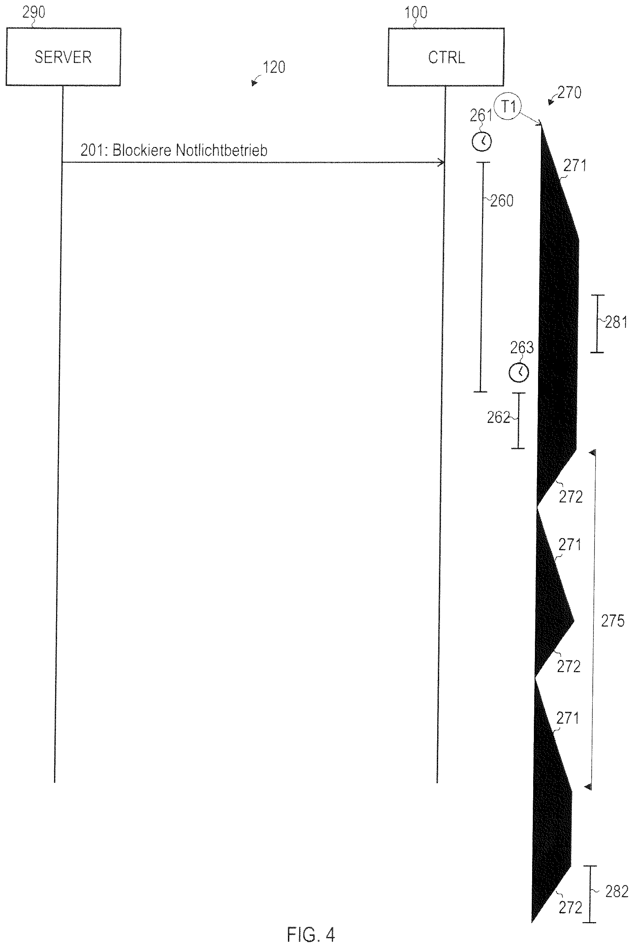

FIG. 4 ist ein Signalflussdiagramm, welches Steuerdaten, die von einem zentralen Server an das Steuergerät gesendet werden, illustriert, wobei FIG. 4 weiterhin das Blockieren der Entladung der Notstrombatterie in Abhängigkeit der Steuerdaten gemäß verschiedener Ausführungsformen illustriert, wobei die Steuerdaten AUS-Steuerdaten umfassen.

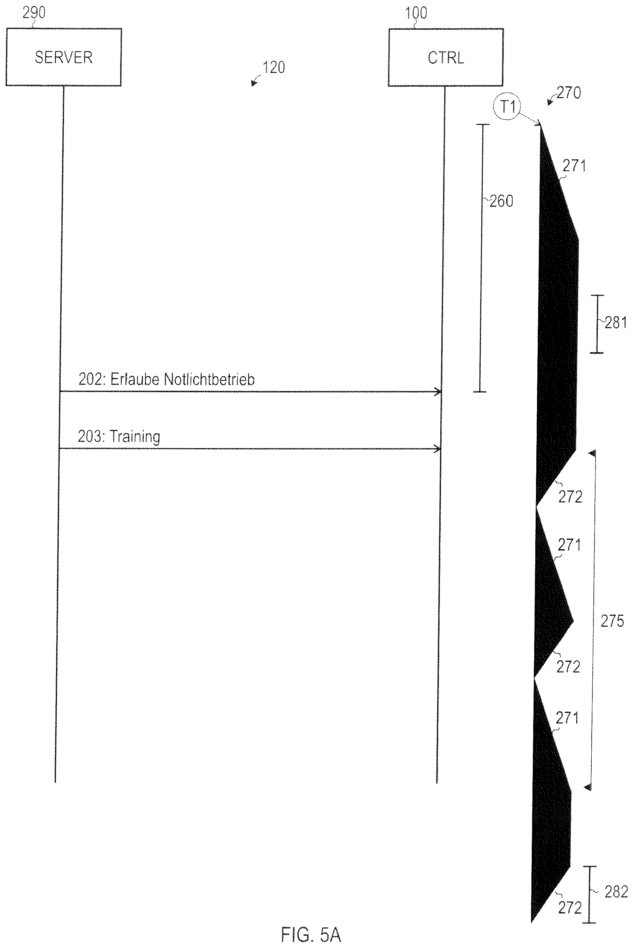

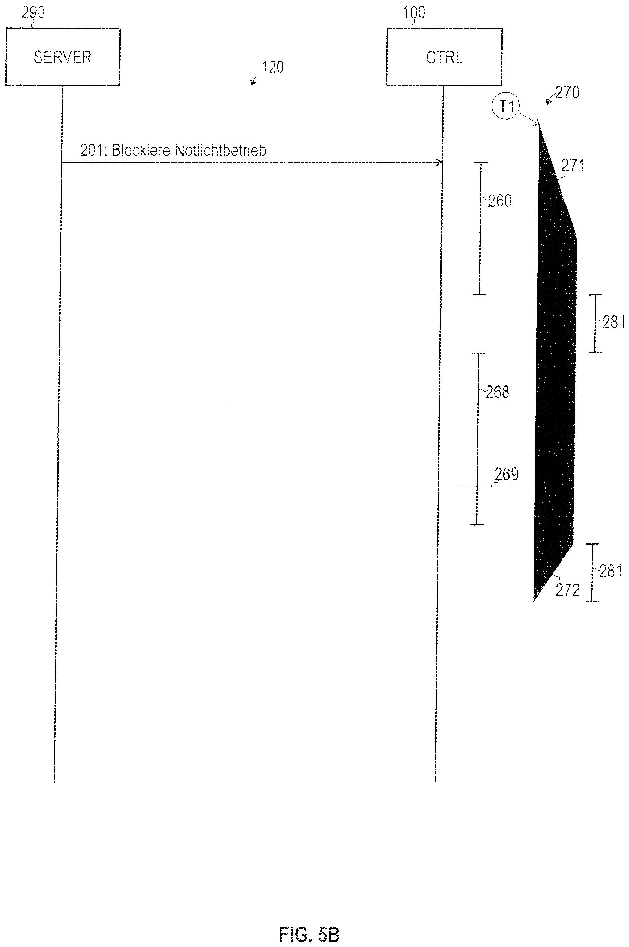

FIG. 5A ist ein Signalflussdiagramm, welches Steuerdaten, die von einem zentralen Server an das Steuergerät gesendet werden, illustriert, wobei FIG. 5 weiterhin das Blockieren der Entladung der Notstrombatterie in Abhängigkeit der Steuerdaten gemäß verschiedener Ausführungsformen illustriert, wobei die Steuerdaten AN-Steuerdaten umfassen.
FIG. 5B ist ein Signalflussdiagramm, welches Steuerdaten, die von einem zentralen Server an das Steuergerät gemäß verschiedener Ausführungsformen gesendet werden, illustriert, wobei
FIG. 5B einen Zeitgeber illustriert, der einen Zeitraum misst in dem eine Versorgungsspannung ohne Unterbrechung vorhanden ist.
FIG. 6 ist ein Flussdiagramm eines Verfahrens gemäß verschiedener Ausführungsformen.
FIG. 7 ist ein Flussdiagramm eines Verfahrens gemäß verschiedener Ausführungsformen.
FIG. 8 ist ein Flussdiagramm eines Verfahrens gemäß verschiedener Ausführungsformen.
FIG. 9 illustriert schematisch eine elektrische Sicherung gemäß verschiedener Ausführungsformen, wobei FIG. 9 die elektrische Sicherung in einer geschlossenen Position eines entsprechenden Kippschalters darstellt.
FIG. 10 illustriert schematisch eine elektrische Sicherung gemäß verschiedener Ausführungsformen, wobei FIG. 10 die elektrische Sicherung in einer geöffneten Position eines entsprechenden Kippschalters darstellt.
FIG. 11 illustriert schematisch eine elektrische Sicherung gemäß verschiedener Ausführungsformen, wobei FIG. 11 die elektrische Sicherung in einer geöffneten Position eines entsprechenden Kippschalters darstellt.

### DETAILLIERTE BESCHREIBUNG VON AUSFÜHRUNGSFORMEN

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird. In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein. Funktionale Einheiten können als Hardware, Software oder eine Kombination aus Hardware und Software implementiert werden.

Nachfolgend werden Techniken beschrieben, welche es ermöglichen, die Entladung einer Notstrombatterie zu steuern. Derart kann es möglich sein, eine ungewollte Entladung der Notstrombatterie - zum Beispiel aufgrund des unnötigen Auslösens eines Notstrombetriebs der Leuchte - zu blockieren. Ein solches Blockieren der Entladung der Notstrombatterie kann insbesondere während einer Installationsphase von Leuchten in einem Gebäude erstrebenswert sein, da in einer solchen Installationsphase typischerweise die Energieversorgung über einen Netzanschluss wiederholt unterbrochen wird. Eine unkontrollierte Entladung der Notstrombatterie, die zu einer möglicherweise herabgesetzten Ladungskapazität bzw. einem herabgesetzten SOH der Notstrombatterie führen könnte, wird dadurch vermieden.

Dabei können unterschiedliche Techniken zum Konfigurieren der Steuerung der Entladung der Notstrombatterie verwendet werden. In manchen Beispielen wäre es möglich, dass Steuerdaten verwendet werden, in Abhängigkeit von welchen die Entladung der Notstrombatterie gesteuert wird. Alternativ oder zusätzlich wäre es in anderen Beispielen möglich, dass eine Zeitabfolge von mehreren Unterbrechungen einer Versorgungsspannung des Netzanschlusses gemessen wird und mit einem gespeicherten Zeitmuster verglichen wird. Dann kann in Abhängigkeit von dem Vergleich die Entladung der Notstrombatterie gesteuert werden.

In FIG. 1A ist eine Leuchte 190 dargestellt, die einen Notstrombetrieb über eine Notstrombatterie 111 ermöglicht. Die Notstrombatterie 111 kann zum Beispiel mehrere in Serie geschaltete Batteriezellen umfassen. Zum Beispiel kann die Notstrombatterie 111 ein wiederaufladbarer Nickel-Kadmium (NiCd) oder Nickel-Metallhydrid (NiMh) Ladungsspeicher sein. Derart kann die Notstrombatterie 111 eine Ladungskapazität aufweisen, die ausreicht, um ein Leuchtmittel 112, beispielsweise eine LED oder Gasentladungslampe, für eine Zeitspanne im Bereich von Minuten oder Stunden zu betreiben.

Um die Aufladung und Entladung der Notstrombatterie 111 zu steuern, weist die Leuchte 190 ein Steuergerät 100 auf. Das Steuergerät 100 umfasst einen Logikschaltkreis 102 - beispielsweise einen Mikroprozessor - und eine Kontrollschnittstelle 103. Der Logikschaltkreis 102 ist eingerichtet, um mittels der Kontrollschnittstelle 103 Energieversorgung des Leuchtmittels 112 wahlweise über einen Netzanschluss 130 oder über die Notstrombatterie 111 zu steuern. Der Netzanschluss 130 ist mit dem Leuchtmittel 112 und der Notstrombatterie 111 gekoppelt. Zum Beispiel kann im Normalbetrieb (Notstrombetrieb), d.h. einem Zustand, in dem die Versorgungsspannung des Netzanschlusses 130 einen vorgegebenen Schwellenwert überschreitet (unterschreitet), die Energieversorgung des Leuchtmittel 112 über den Netzanschluss 130 (über die Notstrombatterie 111) implementiert werden.

Zum Steuern der Energieversorgung des Leuchtmittels 112 kann die Kontrollschnittstelle 103 mindestens einen Schalter (in FIG. 1A nicht gezeigt) umfassen. Der mindestens eine Schalter kann z.B. als mechanisches Relais oder durch Leistungselektronik implementiert sein. Der mindestens eine Schalter kann wahlweise die Notstrombatterie 111 oder den Netzanschluss 130 mit dem Leuchtmittel 112 verbinden. Darüber hinaus kann der mindestens eine Schalter wahlweise die Notstrombatterie 111 mit dem Leuchtmittel 112 verbinden - um eine Entladung der Notstrombatterie 111 über das Leuchtmittel 112 als Verbraucher zu implementieren - oder die Notstrombatterie 111 mit dem Netzanschluss 130 verbinden - um eine Aufladung der Notstrombatterie über den Netzanschluss 130 zu implementieren. Insoweit kann der Logikschaltkreis 102 eingerichtet sein, um mittels der Kontrollschnittstelle 103 die Entladung und die Aufladung der Notstrombatterie 111 über den Netzanschluss 130 zu steuern.

In FIG. 1A ist ein Szenario illustriert, in dem die Leuchte 190 lediglich ein einzelnes Leuchtmittel 112 umfasst. Es wäre aber in verschiedenen Szenarien auch möglich, dass die Leuchte 190 mehr als ein Leuchtmittel 112 umfasst. Zum Beispiel könnte die Leuchte 190 zwei Leuchtmittel umfassen, so sodass im Normalbetrieb und im Notstrombetrieb unterschiedliche Leuchtmittel betrieben werden. Derart kann der Energieverbrauch im Notstrombetrieb gesenkt werden und das entsprechende Leuchtmittel für eine längere Zeitspanne betrieben werden.

Das Leuchtmittel 112 kann eine Lichtstärke aufweisen, die ausreicht, um einen Raum zu beleuchten. Zum Beispiel kann das Leuchtmittel 112 eine Lichtstärke von mindestens 100 cd, bevorzugt von mindestens 500 cd aufweisen.

Voranstehend wurden Techniken beschrieben, mittels welchen die Leuchte 190 in Abhängigkeit einer Verfügbarkeit der Energieversorgung über den Netzanschluss 130 wahlweise in dem Notstrombetrieb betrieben werden kann. In anderen Worten kann also der Logikschaltkreis 102 eingerichtet sein, um in Abhängigkeit einer Verfügbarkeit der Energieversorgung über den Netzanschluss 130 eine Entladung der Notstrombatterie 111 über das Leuchtmittel 112 als Verbraucher zu steuern. Der Logikschaltkreis 102 kann also eingerichtet sein, um mittels der Kontrollschnittstelle 103 Energieversorgung des Leuchtmittels 112 wahlweise über den Netzanschluss 130 oder über die Notstrombatterie 111 zu steuern.

Das Steuergerät 100 umfasst weiterhin eine Kommunikationsschnittstelle 101. Die Kommunikationsschnittstelle 101 ist eingerichtet, um Steuerdaten über eine Datenverbindung 120 zu empfangen. In dem Szenario der FIG. 1A ist die Datenverbindung 120 als paketierte Datenbus-Kommunikation implementiert. Insbesondere ist es möglich Punkt-zu-Multipunkt-Kommunikation zu implementieren, um gleichzeitig mehrere Leuchten 190 mittels entsprechender Steuerdaten fernzusteuern. In verschiedenen Szenarien können unterschiedliche Techniken der Datenbus-Kommunikation eingesetzt werden. Zum Beispiel wäre es möglich, dass die Datenbus-Kommunikation gemäß dem DALI oder DSI Standard implementiert wird.

Der Logikschaltkreis 102 ist eingerichtet, um in Abhängigkeit der über die Kommunikationsschnittstelle 101 empfangenen Steuerdaten die Entladung der Notstrombatterie 111 zu steuern. Derart kann zum Beispiel eine Entladung der Notstrombatterie 111 über das Leuchtmittel 112 in Abhängigkeit der Steuerdaten wahlweise erlaubt oder blockiert werden. Es ist auch möglich, die Entladung der Notstrombatterie 111 über das Leuchtmittel gezielt auszulösen.

Zum Beispiel wäre es möglich, den Betrieb der Leuchte 190 in dem Notstrombetrieb zu blockieren. Derart kann eine ungewollte Entladung der Notstrombatterie 111, zum Beispiel vor einem initialen Entladungs-Aufladungs-Trainingszyklus, verhindert werden. Während einer Installationsphase kann verhindert werden, dass eine Entladung der Notstrombatterie 111 stattfindet. Es ist auch möglich, den Entladungs-Aufladungs-Trainingszyklus mittels der Steuerdaten gezielt auszulösen. Derart kann der Entladungs-Aufladungs-Trainingszyklus zu einem Zeitpunkt ausgelöst werden, zu dem eine unterbrechungsfreie Energieversorgung über den Netzanschluss 130 wahrscheinlich erscheint. Dann kann eine besonders effektive Konditionierung der Notstrombatterie 111 erfolgen.

Die Leuchte 190 umfasst weiterhin eine Mensch-Maschine-Schnittstelle 115, die zum Beispiel durch eine Statuslampe mit vergleichsweise geringer Lichtstärke implementiert wird. Der Logikschaltkreis 102 ist eingerichtet, um in Abhängigkeit der Steuerdaten ein Signal über die Mensch-Maschine-Schnittstelle 115 auszugeben. Zum Beispiel kann, je nachdem ob eine Entladung oder Aufladung der Notstrombatterie 111 vorliegt, ein unterschiedliches Signal an einen Benutzer über die Mensch-Maschinen-Schnittstelle 115 ausgegeben werden. Insbesondere wäre es zum Beispiel möglich, zu indizieren, dass die Entladung der Notstrombatterie 111 in Abhängigkeit der Steuerdaten blockiert wird; dies kann aus Sicherheitsgründen erstrebenswert sein, um zu indizieren, dass der Notstrombetrieb der Leuchte 190 gegenwärtig unterbunden ist. Derart kann eine Betriebssicherheit erhöht werden.

FIG. 1B entspricht grundsätzlich FIG. 1A, wobei die Kommunikationsschnittstelle 101 mit dem Netzanschluss 130 gekoppelt ist. Die Kommunikationsschnittstelle 101 kann derart die Steuerdaten durch Demodulation von entsprechenden Signalen, die auf die Versorgungsspannung des Netzanschlusses 130 aufmoduliert sind, empfangen. Eine solche Technik wird häufig auch als Netzanschluss-basierte Trägerfrequenzanlage (engl. power line communication) bezeichnet. Z.B. könnten die Steuerdaten als Phasenanschnitt und / oder Phasenabschnitt zumindest einer Halbwelle der Versorgungsspannung codiert sein.

FIG. 1C entspricht grundsätzlich den Figs. 1A, 1B. Jedoch weist das Steuergerät 100 in dem Beispiel der FIG. 1C keine Kommunikationsschnittstelle 101 auf. Auch in dem Beispiel der FIG. 1C kann dabei das Steuergerät 100 ferngesteuert werden, um die Entladung der Notstrombatterie beispielsweise gemäß den in Zusammenhang mit der Fig. 1A beschriebenen Beispielen zu steuern. Dazu ist der Logikschaltkreis 102 eingerichtet, um die AC oder DC Versorgungsspannung des Netzanschlusses 130 zu überwachen. Insbesondere kann der Logikschaltkreis 102 eingerichtet sein, um kurzzeitige Unterbrechungen der Versorgungsspannung des Netzanschlusses 130 zu detektieren. Beispielsweise kann der Logikschaltkreis 102 eingerichtet sein, um eine Zeitabfolge von mehreren Unterbrechungen der Versorgungsspannung des Netzanschlusses 130 zu messen. Zu diesem Zweck an der Logikschaltkreis 102 zum Beispiel einen Analog-Digital-Wandler aufweisen. Der Logikschaltkreis kann beispielsweise wiederum einen Mikroprozessor aufweisen.

FIG. 1D illustriert Aspekte in Bezug auf eine Zeitabfolge von mehreren Unterbrechungen 1001 der Versorgungsspannung 1000. Die Versorgungsspannung 1000 wird über den Netzanschluss 130 bereitgestellt. Im dem Beispiel der Fig. 1D ist eine AC Versorgungsspannung dargestellt. Es wäre auch eine DC Versorgungsspannung möglich. Aus FIG. 1D ist ersichtlich, dass die Versorgungsspannung 1000 über eine Zeitdauer 1012 drei Unterbrechungen 1001 aufweist. Die Unterbrechungen 1001 weisen jeweils eine Zeitdauer 1011 auf, die in etwa 2,5 Perioden der AC Versorgungsspannung 1000 beträgt.

Das Vorhandensein der Zeitabfolge der mehreren Unterbrechungen 1001 kann indizieren, dass eine bestimmte Steuerung der Entladung der Notstrombatterie erfolgen soll.

Um besser zwischen ungewollten Unterbrechungen 1001 - beispielsweise aufgrund von Kurzschlüssen oder Überlastungen - und Unterbrechungen 1001 zum Steuern der Entladung der Notstrombatterie unterscheiden zu können, ist es möglich, dass eine Zeitabfolge von mehreren Unterbrechungen 1001 gemessen wird und mit einem gespeicherten Zeitmuster verglichen wird. Das gespeicherte Zeitmuster kann ein bestimmtes zeitliches Muster der Unterbrechungen 1001 fordern. Beispielsweise könnte das Zeitmuster eine minimale Anzahl von Unterbrechungen 1001 und/oder eine maximale Anzahl von Unterbrechungen 1001 fordern. Beispielsweise könnte das Zeitmuster die Zeitdauer 1011 spezifizieren. Beispielsweise könnte das Zeitmuster die Zeitdauer 1012 spezifizieren. Wenn die gemessene Zeitabfolge der Unterbrechungen 1001 die Forderungen des gespeicherten Zeitmusters erfüllt, kann eine entsprechende Steuerung der Entladung der Notstrombatterie erfolgen.

Beispielsweise wäre es möglich, dass das Zeitmuster mehr als fünf Unterbrechungen 1001 der Versorgungsspannung 1000 innerhalb einer vorgegebenen Zeitdauer 1012 fordert. Beispielsweise könnte die vorgegebene Zeitdauer 1012 im Bereich von 20 Sekunden bis 3 Minuten liegen. Derart könnte eine manuelle Umsetzung der Zeitabfolge - beispielsweise durch entsprechendes Betätigen einer elektrischen Sicherung - erreicht werden. In anderen Beispielen wäre es möglich, dass die vorgegebene Zeitdauer 1012 nicht länger als 2 Sekunden ist, optional nicht länger als 0,5 Sekunden ist. In solchen Beispielen könnte eine automatische Umsetzung der Zeitabfolge - beispielsweise durch Betätigen einer elektrischen Sicherung - erreicht werden.

In FIG. 2 ist ein beispielhafter Signalfluss von Steuerdaten 201, 202, 203, basierend auf weichen die Entladung 272 der Notstrombatterie 111 gesteuert wird, illustriert. Dabei werden die Steuerdaten 201, 202, 203 von einem zentralen Server 290 an die Steuereinheit 100 der Leuchte 190 über die Datenverbindung 120 gesendet. Es wäre zum Beispiel möglich, dass der Server 290 die Steuerdaten 201, 202, 203 zumindest teilweise über eine Punkt-zu-Multipunkt-Datenverbindung sendet, so dass gleichzeitig mehrere Steuergeräte 100 verschiedener Leuchten ferngesteuert werden können. Z.B. könnten derart alle Leuchten ferngesteuert werden, die Unterbrechungen der Energieversorgung während der Installationsphase ausgesetzt sind.

Zu einem bestimmten Zeitpunkt T1 wird die Leuchte 190 in Betrieb genommen; dies bedeutet, dass z.B. die Notstrombatterie 111 erstmals mit dem Netzanschluss 130 gekoppelt wird. Es erfolgt automatisch eine Aufladung 271 der Notstrombatterie 111 (in FIG. 2 ist auch der Ladungszustand, engl. state-of-charge, SOH 270 der Notstrombatterie 111 als schwarze Fläche illustriert).

Anschließend werden AUS-Steuerdaten 201 von dem Server 290 gesendet und von der Steuereinheit 100 empfangen. Die AUS-Steuerdaten 201 bewirken, dass der Prozessor 102 die Kontrollschnittstelle 103 derart steuert, dass die Entladung 272 der Notstrombatterie 111 blockiert wird; als Reaktion auf das Empfangen der AUS-Steuerdaten 201 blockiert der Prozessor 102 die Entladung 272 der Notstrombatterie 111.

Anstelle der AUS-Steuerdaten 201 könnte in anderen Beispielen auch eine geeignete Zeitabfolge von mehreren Unterbrechungen 1001 der Versorgungsspannung 1000 angewendet werden, um das Steuergerät 100 entsprechend zu informieren. Beispielsweise könnte ein Elektriker den Netzanschluss während einer definierten Zeitdauer mehrmals trennen, zum Beispiel fünfmal innerhalb von 30 Sekunden. Eine entsprechende Frequenz kann so gewählt werden, dass eine Blockade des Notstrombetriebs nicht zufällig ausgelöst werden kann und trotzdem die Blockade des Notstrombetriebs durch den Elektriker komfortabel auszulösen ist.

Anschließend kommt es zu einer persistenten Unterbrechung 281 der Energieversorgung über den Netzanschluss 130, bspw. weil ein Installateur während der Installationsphase aus Sicherheitsgründen die Stromversorgung unterbricht. Dies bedeutet, dass eine Unterbrechung 281 der Versorgungsspannung 1000 vorliegt. Da der Notstrombetrieb der Leuchte 190 aufgrund der AUS-Steuerdaten 201 zu diesem Zeitpunkt blockiert ist, findet jedoch keine Entladung 272 der Notstrombatterie 111 über das Leuchtmittel 112 als Verbraucher statt.

Nach einer bestimmten Zeitspanne 260 nach dem Versenden der AUS-Steuerdaten 201 werden AN-Steuerdaten 202 von dem Server 290 gesendet und von dem Steuergerät 100 empfangen. Der Prozessor 102 ist eingerichtet, um bis zum Empfangen der AN-Steuerdaten 202 die Entladung 272 der Notstrombatterie 111 zu blockieren. Dies bedeutet, dass in der Zeitspanne 260 zwischen dem Empfangen der AUS-Steuerdaten 201 und dem Empfangen der AN-Steuerdaten 202 der Notstrombetrieb der Leuchte 190 blockiert ist; erst anschließend ist der Notstrombetrieb der Leuchte 190 wieder freigegeben. Deshalb kommt es bei einem späteren, weiteren Ausfall 282 der Energieversorgung über den Netzanschluss 130 zu einer Entladung 272 der Notstrombatterie 111 über das Leuchtmittel 112 als Verbraucher.

Wiederum könnte anstelle der AN-Steuerdaten 202 eine geeignete Zeitabfolge von mehreren Unterbrechungen 1001 der Versorgungsspannung 1000 angewendet werden, um das Steuergerät 100 entsprechend zu informieren. Beispielsweise trennt ein Elektriker den Netzanschluss mehrmals während eines definierten Zeitraums, zum Beispiel sechs Mal innerhalb von 30 Sekunden. Daraufhin wird der Notstrombetrieb für die Leuchten deblockiert und die Notleuchten sind voll funktionsfähig. Mittels mehrerer Zeitabfolgen der Unterbrechungen 1001 kann also im Allgemeinen zwischen dem blockierten Zustand und dem deblockierten Zustand der Entladung hin- und her geschaltet werden.

Vor dem weiteren Ausfall 282 wird jedoch ein Entladungs-Aufladungs-Trainingszyklus 275 der Notstrombatterie 111 durch die Steuerdaten 203 ausgelöst. Dies ist optional. Der Entladungs-Aufladungs-Trainingszyklus 275 umfasst in dem beispielhaften Szenario der FIG. 2 zwei Entladungen 272 und zwei Aufladungen 271 der Notstrombatterie 111. Dabei erfolgen die Entladungen 272 über das Leuchtmittel 112 und die Aufladungen 271 erfolgen über den Netzanschluss 130.

In dem Szenario der FIG. 3 implementiert der Prozessor 102 einen Zeitgeber 261, der eine vorgegebene Zeitspanne 260 ab dem Empfangen der AUS-Steuerdaten 201 bemisst. Anstelle der AUS-Steuerdaten 201 könnte in anderen Beispielen auch eine geeignete Zeitabfolge von mehreren Unterbrechungen 1001 der Versorgungsspannung 1000 angewendet werden, um das Steuergerät 100 entsprechend zu informieren.

Nach Ablauf des Zeitgebers bzw. nach Ablauf der vorgegebenen Zeitspanne 260 wird der Notstrombetrieb der Leuchte 190 bzw. die Entladung der Notstrombatterie 111 wieder freigegeben. In dem Szenario der FIG. 3 ist es nicht erforderlich, dedizierte AN-Steuerdaten 202 zwischen dem Server 290 und dem Steuergerät 100 zu übertragen. In Reaktion auf das Empfangen der AUS-Steuerdaten 201 erfolgt das Blockieren der Entladung 272 der Notstrombatterie 111 für die vorgegebene Zeitspanne 260; danach wird die Entladung automatisch freigegeben, jedoch nicht automatisch ausgelöst.

In dem Szenario der FIG. 4 implementierte Prozessor 102 einen weiteren Zeitgeber 263, der eine weitere Zeitspanne 262 bemisst; nach Ablauf der weiteren Zeitspanne 262 wird der Entladungs-Aufladungs-Trainingszyklus 175 ausgelöst. In dem Szenario der FIG. 4 ist es entbehrlich, die Steuerdaten 203 zum Auslösen des Entladungs-Aufladungs-Trainingszyklus 275 zu übertragen. Die Entladung der Notstrombatterie 111 wird automatisch ausgelöst.

In dem Szenario der FIG. 5A erfolgt das Blockieren der Entladung 272 der Notstrombatterie 111 ab der erstmaligen Aufladung 271 der Notstrombatterie 111 über den Netzanschluss 130, z.B. nach erstmaliger Inbetriebnahme der Leuchte 190 oder nach Austausch der Notstrombatterie 111. Das Blockieren der Entladung 272 der Notstrombatterie 111 wird solange fortgesetzt, bis die AN-Steuerdaten 202 empfangen werden. Wiederum könnte anstelle der AN-Steuerdaten 202 eine geeignete Zeitabfolge von mehreren Unterbrechungen 1001 der Versorgungsspannung 1000 angewendet werden, um das Steuergerät 100 entsprechend zu informieren.

Das Szenario der FIG. 5B entspricht grundsätzlich dem Szenario der FIG. 2. In dem Beispiel der FIG. 5B implementiert das Steuergerät 100 einen Zeitgeber 268. Der Zeitgeber 268 misst den Zeitraum, in welchem die Versorgungsspannung 1000 ohne Unterbrechungen 181 vorhanden ist. Zum Beispiel wird der Zeitgeberwert des Zeitgebers 268 durch die Unterbrechung 281 der Versorgungsspannung 1000 zurückgesetzt. Weil die Unterbrechung 281 isoliert auftritt und nicht Teil einer Zeitabfolge von mehreren Unterbrechungen ist, wird die Unterbrechung 281 durch das Steuergerät 100 nicht in Bezug auf das Steuern der Entladung der Notstrombatterie 111 interpretiert.

Wenn der Zeitgeberwert des Zeitgebers 268 einen bestimmten vorgegebenen Schwellenwert 269 überschreitet, wird die Blockade der Entladung der Notstrombatterie ohne weiteres Zutun aufgehoben. Dies bedeutet, dass das übersenden von AN-Steuerdaten 202 oder einer entsprechenden Zeitabfolge von mehreren Unterbrechungen 1000 unterbleiben kann.

Selbstverständlich können die verschiedenen Szenarien der FIGs. 2-5A, 5B auch miteinander kombiniert werden.

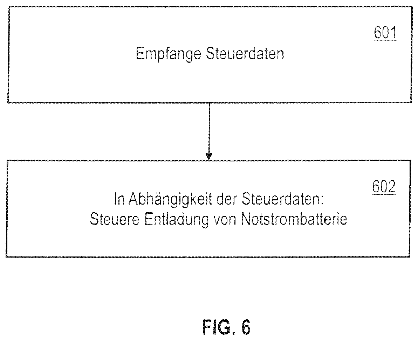

In FIG. 6 ist ein Verfahren offenbart. Zunächst werden über eine Datenverbindung Steuerdaten empfangen, 601.

Anschließend erfolgt in Abhängigkeit der empfangenen Steuerdaten das Steuern der Entladung einer Notstrombatterie einer Leuchte, 602. Die Entladung Notstrombatterie könnte z.B. über mindestens ein Leuchtmittel der Leuchte geschehen. Zum Beispiel könnte im Rahmen von 602 die Entladung der Notstrombatterie blockiert werden.

Zum Beispiel könnte eine Reaktion auf das Empfangen von AUS-Steuerdaten die Entladung der Notstrombatterie blockiert werden.

Zum Beispiel könnte eine Reaktion auf das Empfangen von AUS-Steuerdaten die Entladung der Notstrombatterie für eine vorgegebene Zeitspanne blockiert werden.

Zum Beispiel könnten die AUS-Steuerdaten die vorgegebene Zeitspanne indizieren.

Zum Beispiel könnte im Rahmen von 602 bis zum Empfangen von AN-Steuerdaten die Entladung der Notstrombatterie blockiert werden.

Zum Beispiel könnte die Entladung der Notstrombatterie ab einer erstmaligen Aufladung der Notstrombatterie über einen Netzanschluss der Leuchte bis zum Empfangen der AN-Steuerdaten blockiert werden.

Zum Beispiel könnte im Rahmen von 602 in Abhängigkeit der Steuerdaten mindestens ein Entladungs-Aufladungs-Trainingszyklus der Notstrombatterie ausgelöst werden.

Es wäre zum Beispiel möglich, dass die Datenverbindung als paketierte Datenbus-Kommunikation implementiert ist.

Es wäre auch möglich, dass die Datenverbindung als Punkt-zu-Multipunkt-Kommunikation implementiert ist.

Es wäre auch möglich, dass die Steuerdaten durch Bestimmen eines Phasenanschnitts und/oder Phasenabschnitts mindestens einer Halbwelle einer Versorgungsspannung eines Netzanschlusses demoduliert werden.

Optional wäre es in dem Verfahren der FIG. 6 auch möglich, in Abhängigkeit der Steuerdaten eine Aufladung der Notstrombatterie über den Netzanschluss zu steuern.

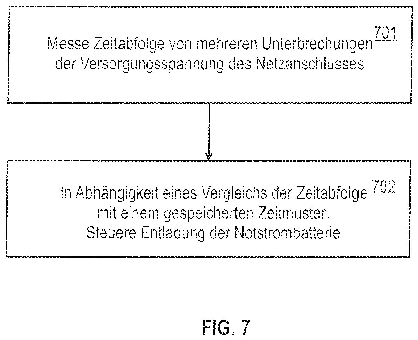

In FIG. 7 ist ein Verfahren offenbart. Zunächst wird eine Zeitabfolge von mehreren Unterbrechungen der Versorgungsspannung eines Netzanschlusses gemessen, 701.

Anschließend erfolgt in Abhängigkeit eines Vergleichs der gemessenen Zeitabfolge mit einem gespeicherten Zeitmuster das Steuern der Entladung einer Notstrombatterie einer Leuchte, 702. Die Entladung der Notstrombatterie könnte zum Beispiel über mindestens ein Leuchtmittel der Leuchte geschehen. Zum Beispiel könnte im Rahmen von 702 die Entladung der Notstrombatterie blockiert werden.

Zum Beispiel könnte als Reaktion auf das Vergleichen beispielsweise ein positives Vergleichsergebnis die Entladung der Notstrombatterie blockiert werden.

Zum Beispiel könnte als Reaktion auf das Vergleichen beispielsweise ein positives Vergleichsergebnis die Entladung der Notstrombatterie für eine vorgegebene Zeitspanne blockiert werden.

Zum Beispiel könnte im Rahmen von 702 bis zum Empfangen einer weiteren Zeitabfolge von mehreren Unterbrechungen der Versorgungsspannung des Netzanschlusses die Entladung der Notstrombatterie blockiert werden.

Zum Beispiel könnte die Entladung der Notstrombatterie ab einer erstmaligen Aufladung der Notstrombatterie über einen Netzanschluss der Leuchte bis zum Vergleichen blockiert werden.

Zum Beispiel könnte im Rahmen von 702 in Abhängigkeit des Vergleichens beispielsweise ein positives Vergleichsergebnis ein Entladung-Aufladung-Trainingszyklus der Notstrombatterie ausgelöst werden.

Im Allgemeinen wäre es möglich, die Energieversorgung des Leuchtmittels wahlweise über den Netzanschluss der Leuchte oder über die Notstrombatterie zu steuern, zum Beispiel in Abhängigkeit einer Verfügbarkeit der Energieversorgung des Leuchtmittels über den Netzanschluss.

Zum Beispiel kann in Abhängigkeit der Entladung der Notstrombatterie ein Signal über eine Mensch-Maschinen-Schnittstelle ausgegeben werden.

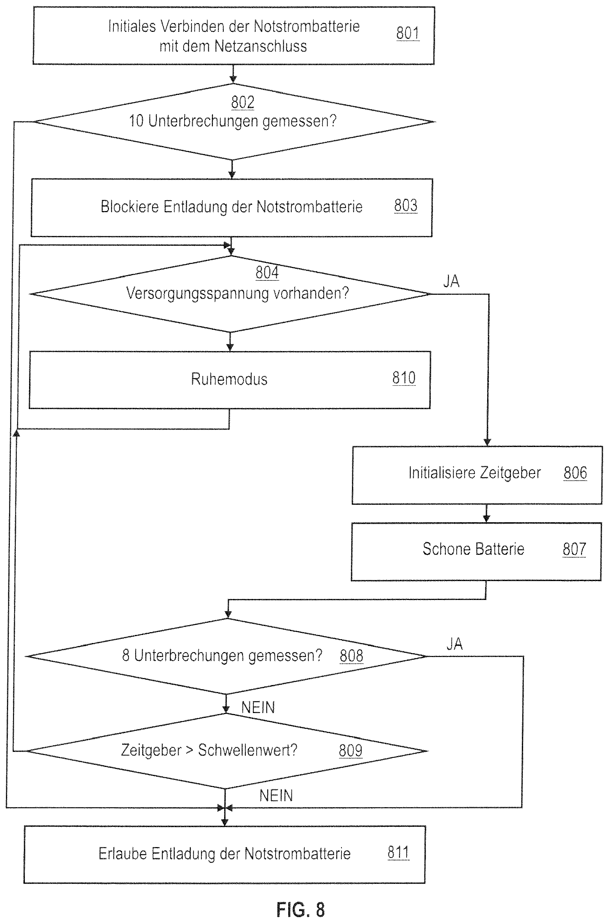

In FIG. 8 ist ein Verfahren offenbart. Zunächst erfolgt in 801 das initiale Verbinden der Notstrombatterie mit einem Netzanschluss. Zum Beispiel kann 801 im Rahmen einer Installationsphase ausgeführt werden.

Dann wird in 802 überprüft, ob eine Zeitabfolge von mehreren Unterbrechungen der Versorgungsspannung des Netzanschlusses gemessen wird. In dem Beispiel der FIG. 8 wird überprüft, ob eine Zeitabfolge von mindestens zehn Unterbrechungen gemessen wird. Beispielsweise kann dabei überprüft werden, ob innerhalb einer Zeitdauer von 1 Minute mindestens zehn Unterbrechungen gemessen werden. Dabei kann beispielsweise gefordert werden, dass zwischen zwei benachbarten Unterbrechungen jeweils mindestens eine Zeitdauer von 1 Sekunde liegt. Beispielsweise kann dazu ein Vergleich zwischen der Zeitabfolge der mehreren Unterbrechungen mit einem vorgegebenen Zeitmuster erfolgen. Wenn der Vergleich negativ ausfällt, dann wird in 801 die Entladung der Notstrombatterie erlaubt. Dies bedeutet, dass beispielsweise die Aktivierung eines Notstrombetriebs möglich ist., d.h. der Notstrombetrieb freigegeben wird.

Wenn der Vergleich in 802 jedoch positiv ausfällt - das heißt die Zeitabfolge der mehreren Unterbrechungen der Versorgungsspannung des Netzanschlusses eine oder mehrere Vorgaben des Zeitmusters erfüllt -, dann wird in 803 die Entladung der Notstrombatterie blockiert. Dies bedeutet, dass der Notstrombetrieb nicht aktiviert werden kann.

In 804 wird anschließend überprüft, ob die Versorgungsspannung vorhanden ist. Wenn die Versorgungsspannung in 804 nicht vorhanden ist, dann wird in 810 ein Ruhemodus der Notstrombatterie aktiviert. Dies bedeutet, dass alle möglichen Verbraucher - wie beispielsweise Zeitgeber oder andere Logikelemente des Steuergeräts - ausgeschaltet werden, sodass die Entladung der Notstrombatterie minimiert wird.

Wenn in 804 detektiert wird, dass die Versorgungsspannung auf dem Netzanschluss vorhanden ist, so wird in 806 ein Zeitgeber initialisiert. Der Zeitgeber überwacht die Zeitdauer, während welcher die Versorgungsspannung ohne Unterbrechung vorhanden ist. Wenn die Versorgungsspannung wegfällt, wird der Zeitgeber erneut initialisiert (in FIG. 8 nicht dargestellt). 804 kann insbesondere isolierte Unterbrechungen berücksichtigen, d.h. Unterbrechungen die nicht Teil einer Zeitabfolge mit mehreren Unterbrechungen sind.

In 807 wird anschließend ein Modus zur Schonung der Notstrombatterie aktiviert. Dazu kann die Notstrombatterie kann in 807 bei Bedarf mittels der Versorgungsspannung des Netzanschlusses geladen werden. Zum Beispiel kann im Falle einer NiMH Notstrombatterie eine bestimmte Erhaltungsladung (engl. trickle Charge) auf die Notstrombatterie angewendet werden. Beispielsweise könnte im Falle einer Lithium-Ionen-Notstrombatterie die maximale Ladung der Notstrombatterie erhalten werden.

Anschließend wird in 808 überprüft, ob eine Zeitabfolge von mehreren Unterbrechungen der Versorgungsspannung des Netzanschlusses gemessen wird. In dem Beispiel der FIG. 8 wird überprüft, ob eine Zeitabfolge von mindestens acht Unterbrechungen der Versorgungsspannung des Netzabschlusses gemessen wird. Wird diese Zeitabfolge in 808 gemessen, so wird die Entladung der Notstrombatterien wieder erlaubt 811. Dies bedeutet, dass der Notstrombetrieb wieder freigegeben wird. Beispielsweise kann in 808 wiederum gefordert werden, dass die acht Unterbrechungen innerhalb einer Zeitdauer von 1 Minute gemessen werden. Beispielsweise könnte in 808 gefordert werden, dass zwischen zwei benachbarten Unterbrechungen jeweils eine Zeitdauer von mindestens 1 Sekunde liegt.

Wird diese Zeitabfolge in 808 jedoch nicht gemessen, bzw. erfüllt die Vorgabe des Zeitmusters nicht, so wird in 809 überprüft, ob der in 806 initialisierte Zeitgeber einen bestimmten Schwellenwert überschritten hat. Beispielsweise könnte der Schwellenwert mehrere Stunden oder mehrere Tage, beispielsweise 60 Tage betragen. Beispielsweise könnte der Schwellenwert über eine Kommunikationsschnittstelle eingestellt werden. Beispielsweise könnte die Kommunikationsschnittstelle auf Grundlage einer NFC Verbindung betrieben werden.

Wird in 809 festgestellt, dass der Zeitgeberwert des Zeitgebers den Schwellenwert überschritten hat, so wird in 811 die Entladung der Notstrombatterie wieder erlaubt. Dies bedeutet, dass der Notstrombetrieb wieder freigegeben wird. Andernfalls wird das Verfahren mit 804 fortgesetzt.

Voranstehend wurden verschiedene Beispiele in Bezug auf eine Zeitabfolge von mehreren Unterbrechungen einer Versorgungsspannung eines Netzanschlusses für eine Leuchte beschrieben. Grundsätzlich können in den verschiedenen Beispielen unterschiedliche Techniken eingesetzt werden, um eine solche Zeitabfolge mehrere Unterbrechungen der Versorgungsspannung herbeizuführen. In einem Beispiel könnte es zum Beispiel möglich sein, die Zeitabfolge manuell durch mehrfaches Betätigen eines Tasters einer elektrischen Sicherung herbeizuführen. In anderen Beispielen könnte eine entsprechende Zeitabfolge auch automatisch bereitgestellt werden. Zum Beispiel könnte eine entsprechende Zeitabfolge durch ein geeignetes elektronisches Schaltelement mit einer entsprechenden elektronischen Ansteuerung erzeugt werden. In anderen Beispielen könnte eine entsprechende Zeitabfolge auch durch eine entsprechend mechanisch modifizierte elektrische Sicherung bereitgestellt werden.

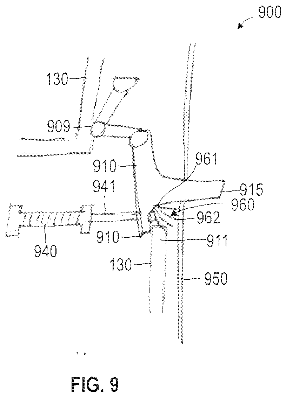

FIG. 9 illustriert Aspekte in Bezug auf eine elektrische Sicherung 900. Die elektrische Sicherung 900 gemäß dem Beispiel der FIG. 9 ist eingerichtet, um eine Zeitabfolge von mehreren Unterbrechungen einer Versorgungsspannung eines Netzanschlusses 130 bereitzustellen. Die Sicherung 900 umfasst insbesondere einen Kippschalter 910. In dem Beispiel der FIG. 9 ist der Kippschalter in einer geschlossenen Position gezeigt. Beispielsweise kann der Kippschalter 910 durch ein Federelement in der geschlossenen Position vorgespannt sein. Dabei wird die Signalleitung des Netzanschlusses 130 (in FIG. 9 von oben nach unten umlaufend) durch den Kippschalter 910 elektrisch verbunden. Ein entsprechender Stromfluss kann die Versorgungsspannung des Netzanschlusses bereitstellen.

Der Kippschalter 910 umfasst auch einen Taster 915, welcher über ein Gehäuse 950 der Sicherung 900 heraus steht. Der Taster 915 kann durch eine Bedienperson betätigt werden. Wenn der Taster 915 betätigt wird, bewegt sich der Kippschalter 910 von dem Gegenkontakt 911 weg und der Stromfluss wird unterbrochen. Der Stromfluss wird auch an dem Kontakt 909 durch eine entsprechende Gelenksanordnung unterbrochen.

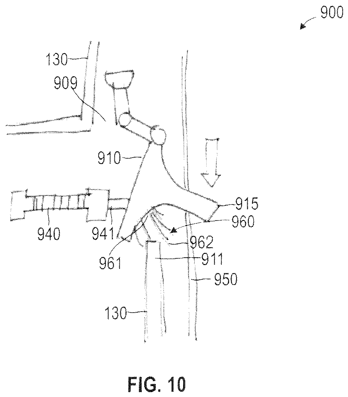

FIG. 10 illustriert Aspekte in Bezug auf die elektrische Sicherung 900. FIG. 10 entspricht dabei FIG. 9, wobei in dem Beispiel der FIG. 10 die elektrische Sicherung 900 während der Bewegung von der geschlossenen Position in die geöffnete Position dargestellt ist. Eine solche Bewegung kann z. B. eine Zeitdauer von 0,5-2 Sekunden erfordern. In dem Beispiel der FIG. 10 wird der Kippschalter 910 aufgrund der manuellen Betätigung des Tasters 915 in Richtung der geöffneten Position bewegt (in FIG. 10 durch den vertikalen Pfeil dargestellt).

Die Sicherung 900 weist mehrere Metallkontakte 960 auf, die zum Beispiel durch Metallfahnen bzw. Metallplättchen implementiert werden können. Erste Enden 961 der Metallkontakte 960 sind am Kippschalter 910 befestigt und dadurch auch mit dem Kippschalter 910 elektrisch verbunden. Bei Betätigung des Tasters 915, wie in FIG. 10 dargestellt, bewegen sich zweite Enden 962 der Metallkontakte 960 in schneller Folge an dem Gegenkontakt 911 vorbei und bewirken trotz einer grundsätzlichen Trennung des Kippschalters 910 von dem Gegenkontakt 911 einen kurzzeitigen Stromfluss. Kurze Strompulse werden während der Zeitdauer der Bewegung durch das Entlangstreifen der Metallkontakte 960 erzeugt. Dadurch wird erreicht, dass eine Anzahl von Unterbrechungen in der Versorgungsspannung des Netzanschlusses erzeugt wird, der Anzahl der Metallkontakte 960 entspricht. Dadurch kann erreicht werden, dass bei Betätigung des Tasters 915 beispielsweise die Entladung der Notstrombatterie (in FIG. 10 nicht dargestellt) blockiert wird.

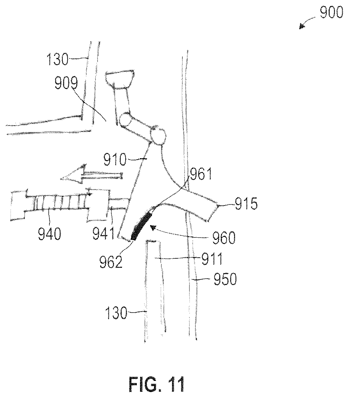

FIG. 11 illustriert Aspekte in Bezug auf die elektrische Sicherung 900. FIG. 11 entspricht dabei grundsätzlich FIG. 10, wobei in dem Beispiel der FIG. 11 die elektrische Sicherung 900 nicht aufgrund der manuellen Betätigung des Tasters 915 in Richtung der geöffneten Position bewegt wird, sondern vielmehr aufgrund eines Stromflusses durch eine Spule 940 eines elektromechanischen Relais. Der Stromfluss kann durch einen Kurzschluss verursacht sein. Das Relais umfasst auch einen Anker 941, der mit dem Kippschalter 910 gekoppelt ist und diesen in Richtung der geöffneten Position bewegt (in FIG. 11 durch den vertikalen Pfeil dargestellt). Der Stromfluss durch die Spule 940 bewirkt auch ein Streumagnetfeld. Das Streumagnetfeld bewirkt, dass die ansonsten bürstenförmige Anordnung der Metallkontakte 960 komprimiert wird und die Metallkontakte 960 an den Kippschalter 910 anliegen. Bei der Bewegung des Kippschalters 910 in Richtung der geöffneten Position erfolgt dadurch kein kurzzeitiges Kontaktieren des Gegenkontakt 911 aufgrund der Metallkontakte 960. Deshalb erfolgt wird auch keine Zeitabfolge von mehreren Unterbrechungen der Versorgungsspannung des Netzanschlusses erzeugt. Dadurch kann erreicht werden, dass bei Auslösen der Sicherung 900 aufgrund eines Kurzschlusses und Betätigung des Kippschalters 910 mittels des Relais 940, 941 die Entladung der Notstrombatterie (in FIG. 10 nicht dargestellt) nicht blockiert wird.

Auch bei Überlast ist es möglich, dass die elektrische Sicherung 900 gemäß der herkömmlichen Funktionsweise auslöst, d.h. ohne eine Zeitabfolge von Unterbrechungen. Zum Beispiel wäre es möglich, dass der Gegenkontakt 911 als Bimetallstreifen ausgebildet ist. Bei einem erhöhten Stromfluss erhitzt sich der Gegenkontakt 911 und verbiegt sich dadurch. Dadurch wird der Kippschalter 910 durch den Gegenkontakt 911 in die geöffnete Position gedrückt. Auch in einem solchen Fall erfolgt kein kurzzeitiges Kontaktieren des Gegenkontakt 911 aufgrund der Metallkontakte 960. Die Trennung des Netzanschlusses 130 findet am Kontakt 909 statt.

Aus der Beschreibung des Betriebs der elektrischen Sicherung 900 im Zusammenhang mit den FIGs. 9-11 ist ersichtlich, dass die elektrische Sicherung sowohl die herkömmliche Schutzfunktionalität in Bezug auf Kurzschluss bereitstellt, darüber hinaus aber noch eine Blockade der Entladung der Notstrombatterie durch manuelle Betätigung des Tasters 915 ermöglicht. Die elektrische Sicherung 900 ermöglicht das automatische Erkennen einer manuellen Netzunterbrechung. Insbesondere kann die Zeitabfolge mehrere Unterbrechungen der Versorgungsspannung automatisch bzw. vollautomatisch erfolgen. Dies reduziert auch eine Fehleranfälligkeit beispielsweise durch Fehlbedienung.

Insbesondere im Vergleich zu anderen Systemen mit Kommunikationsprotokoll ist die Unterbrechung des Notstrombetriebs besonders einfach möglich. Außerdem kann die Unterbrechung des Notstrombetriebs besonders schnell und unkompliziert eingelöst werden. Dies reduziert eine Wahrscheinlichkeit dafür, dass eine Bedienperson vergisst, den Notstrombetrieb zu blockieren. Dadurch ist es weniger wahrscheinlich, dass Notstrombatterien während der Installationsphase geschädigt werden. Entsprechendes gilt auch für die Deblockade des Notstrombetriebs. Da oft der Elektriker, der die Leuchten angeschlossen hat, während der Inbetriebnahme des Gebäudes nicht vor Ort ist, besteht andernfalls das Risiko, dass der Notstrombetrieb nicht korrekt deblockiert werden. Durch eine elektrische Sicherung gemäß den voranstehend diskutierten Beispielen kann dieses Risiko reduziert werden.

Neben dem Schutz der Notstrombatterien erfüllt eine elektrische Sicherung gemäß den voranstehend diskutierten Beispielen auch eine weitere Funktionalität: in gewissen Ländern, wie zum Beispiel Frankreich, kann es vorgeschrieben sein, dass der Notstrombetrieb während Betriebsruhezeiten von Gebäuden blockiert wird. Dies kann zum Beispiel in Schulen während der Sommermonate der Fall sein. Damit soll verhindert werden, dass sich die Notstrombatterien ungewollt entladen und zu Schulbeginn die Notstrombatterien entladen sind und damit ein sicherer Notstrombetrieb nicht gewährleistet werden kann.

Es wurden voranstehend vornehmlich Szenarien erläutert, bei denen in Abhängigkeit der Steuerdaten eine Entladung der Notstrombatterie gesteuert wird; zusätzlich wäre es aber auch möglich, in Abhängigkeit der Steuerdaten eine Aufladung der Notstrombatterie zu Steuern.

## Patentansprüche

1. Steuergerät (100) für eine Leuchte (190), das umfasst:
- eine Kommunikationsschnittstelle (101), die eingerichtet ist, um Steuerdaten (201, 202, 203) über eine Datenverbindung (120) zu empfangen,
- eine Kontrollschnittstelle (103) für die Kopplung mit einer Notstrombatterie (111) für mindestens ein Leuchtmittel (112) der Leuchte (190), und
- mindestens einen Schaltkreis (102), der mit der Kommunikationsschnittstelle (101) und der Kontrollschnittstelle (103) gekoppelt ist und der eingerichtet ist, um mittels der Kontrollschnittstelle (103) in Abhängigkeit der Steuerdaten (201, 202, 203) eine Entladung (272) der Notstrombatterie (111) zu steuern,
**dadurch gekennzeichnet,**
**dass** die Kommunikationsschnittstelle (101) eingerichtet ist, um die Steuerdaten durch Demodulation einer Versorgungsspannung der Leuchte (190) zu empfangen.

2. Steuergerät (100) nach Anspruch 1,
wobei der mindestens eine Schaltkreis (102) eingerichtet ist, um als Reaktion auf das Empfangen von AUS-Steuerdaten (201) die Entladung (272) der Notstrombatterie (111) zu blockieren.

3. Steuergerät (100) nach Anspruch 2,
wobei der mindestens eine Schaltkreis (102) eingerichtet ist, um als Reaktion auf das Empfangen der AUS-Steuerdaten (201) die Entladung (272) der Notstrombatterie (111) für eine vorgegebene Zeitspanne zu blockieren.

4. Steuergerät (100) nach Anspruch 2 oder 3,
wobei der mindestens eine Schaltkreis (102) eingerichtet ist, um bis zum Empfangen von AN-Steuerdaten (202) die Entladung (272) der Notstrombatterie (111) zu blockieren.

5. Steuergerät (100) nach Anspruch 4,
wobei die Kontrollschnittstelle (103) weiterhin mit einem Netzanschluss (130) für die Notstrombatterie (111) gekoppelt ist,
wobei der mindestens eine Schaltkreis (102) eingerichtet ist, um die Entladung (272) der Notstrombatterie (111) ab einer erstmaligen Aufladung (271) der Notstrombatterie (111) über den Netzanschluss (130) bis zum Empfangen der AN-Steuerdaten (202) zu blockieren.

6. Steuergerät (100) nach einem der voranstehenden Ansprüche,
wobei der mindestens eine Schaltkreis (102) eingerichtet ist, um mittels der Kontrollschnittstelle (103) in Abhängigkeit der Steuerdaten (201, 202, 203) mindestens einen Entladungs-Aufladungs-Trainingszyklus (275) der Notstrombatterie (111) auszulösen.

## Claims

1. A control device (100) for a luminaire (190), that comprises:
- a communications interface (101), which is configured, in order to receive control data (201, 202, 203) via a data connection (120),
- a control interface (103) for coupling with an emergency battery (111) for at least one lighting means (112) of the luminaire (190), and
- at least one switching circuit (102), which is coupled with the communications interface (101) and the control interface (103) and which is configured, in order to control a discharge (272) of the emergency battery (111) by means of the control interface (103) depending on the control data (201, 202, 203),
**characterized in**
**that** the communications interface (101) is configured, in order to receive the control data by demodulation of a supply voltage of the luminaire (190).

2. The control device (100) according to Claim 1,
wherein the at least one switching circuit (102) is configured, in order to block the discharge (272) of the emergency battery (111) as a reaction to the reception of OFF control data (201).

3. The control device (100) according to Claim 2,
wherein the at least one switching circuit (102) is configured, in order to block the discharge (272) of the emergency battery (111) for a pre-determined time span as a reaction to the reception of OFF control data (201).

4. The control device (100) according to Claim 2 or 3,
wherein the at least one switching circuit (102) is configured, in order to block the discharge (272) of the emergency battery (111) until the reception of ON control data (202).

5. The control device (100) according to Claim 4,
wherein the control interface (103) is furthermore coupled with a mains connection (130) for the emergency battery (111).
wherein the at least one switching circuit (102) is configured, in order to block the discharge (272) of the emergency battery (111) starting from a first charging (271) of the emergency battery (111) via the mains connection (130) until the reception of the ON control data (202).

6. The control device (100) according to any one of the preceding claims,
wherein the at least one switching circuit (102) is configured, in order to trigger at least one discharge-charging training cycle (275) of the emergency battery (111) by means of the control interface (103) depending on the control data (201, 202, 203).

## Revendications

1. Appareil de commande (100) pour un luminaire (190), qui comprend :
- une interface de communication (101), qui est agencée pour recevoir des données de commande (201, 202, 203) par le biais d'une liaison de données (120),
- une interface de contrôle (103) pour l'accouplement avec une batterie de courant de secours (111) pour au moins un moyen d'éclairage (112) du luminaire (190), et
- au moins un circuit (102) qui est couplé à l'interface de communication (101) et à l'interface de contrôle (103), et qui est agencé pour commander une décharge (272) de la batterie de courant de secours (111) au moyen de l'interface de contrôle (103) en fonction des données de commande (201, 202, 203),
**caractérisé en ce que**
l'interface de communication (101) est agencée pour recevoir les données de commande par démodulation d'une tension d'alimentation du luminaire (190).

2. Appareil de commande (100) selon la revendication 1,
le circuit (102) au moins au nombre de un étant agencé pour, en réaction à la réception de données de commande ARRET (201), bloquer la décharge (272) de la batterie de courant de secours (111).

3. Appareil de commande (100) selon la revendication 2,
le circuit (102) au moins au nombre de un étant agencé pour, en réaction à la réception des données de commande ARRET (201), bloquer la décharge (272) de la batterie de courant de secours (111) pendant une période de temps prédéfinie.

4. Appareil de commande (100) selon la revendication 2 ou 3, le circuit (102) au moins au nombre de un étant agencé pour bloquer la décharge (272) de la batterie de courant de secours (111) jusqu'à la réception de données de commande MARCHE (202).

5. Appareil de commande (100) selon la revendication 4,
l'interface de contrôle (103) étant en outre couplée à un raccordement au réseau (130) pour la batterie de courant de secours (111),
le circuit (102) au moins au nombre de un étant agencé pour bloquer la décharge (272) de la batterie de courant de secours (111) à partir d'une première charge (271) de la batterie de courant de secours (111) par le biais du raccordement au réseau (130) jusqu'à la réception des données de commande MARCHE (202).

6. Appareil de commande (100) selon l'une des revendications précédentes,
le circuit (102) au moins au nombre de un étant agencé pour déclencher au moins un cycle de décharge-charge-training (275) de la batterie de courant de secours (111) au moyen de l'interface de contrôle (103) en fonction des données de commande (201, 202, 203).
